# EUROPEAN PATENT APPLICATION

(11) **EP 4 440 218 A1**
(43) Date of publication of application: **02.10.2024**
(21) Application number: 21965091.8
(22) Date of filing: 24.11.2021
(51) Int. Cl.: H04W 72/04

(54) **METHOD AND APPARATUS FOR DETERMINING THE NUMBER OF SLOTS, METHOD AND APPARATUS FOR DETERMINING SLOT POSITIONS, METHOD AND APPARATUS FOR DETERMINING DURATION OF MULTI-SLOT GROUP, AND MEDIUM**

(71) Applicant: Beijing Xiaomi Mobile Software Co., Ltd., Beijing 100085 (CN)
(72) Inventor: FU, Ting, Beijing 100085 (CN)
(74) Representative: Stöckeler, Ferdinand
(86) International application number: PCT/CN2021/132911
(87) International publication number: WO 2023/092353

(57) **Abstract**

Provided in the present disclosure are a method and apparatus for determining the number of slots, a method and apparatus for determining slot positions, a method and apparatus for determining a duration of a multi-slot group, and a medium, which methods, apparatuses and medium are applied to the technical field of wireless communications. The method for determining the number of slots comprises: determining a first value X on the basis of a subcarrier spacing (SCS) of a preset channel, wherein the first value X is the total number of slots which are comprised in a multi-slot group corresponding to a second-type group search space. In the present disclosure, a user equipment determines, on the basis of an SCS of a preset channel, the total number of slots which are comprised in a multi-slot group corresponding to a second-type group search space Group(2)SS, such that the user equipment can clearly determine, when different channels have different SCSs, the number of slots which are comprised in the multi-slot group corresponding to the Group(2)SS, thereby properly using the number of slots.

## Description

### FIELD

The present disclosure relates to the field of wireless communication technologies, in particular to a method and an apparatus for determining a number of a slot, a position of a slot and a duration of a multi-slot group, and a medium.

### BACKGROUND

In the wireless communication protocol, in the New Radio (NR) communication protocol of the 5th generation mobile communication technology (5G), the downlink data is carried on a physical downlink shared channel (PDSCH), and the uplink data is carried on a physical uplink shared channel (PUSCH). The base station device schedules PDCCH and PUSCH through the downlink control information (DCI) carried on a physical downlink control channel (PDCCH).

The PDCCH channel includes a common search space (CSS) and a UE-specific search space (USS). The CSS is used to carry cell common control information, multicast control information, UE-specific control information, and the USS is used to carry UE-specific control information.

Type #0 CSS needs to be monitored when the user equipment (UE) is in an idle state of Radio Resource Control (RRC). The slot where the Type #0 CSS (which is monitored when the user equipment 101 is in the idle state of RRC) is meets the condition that: the slot of the Type #0 CSS is determined according to the system frame number (SFN), where the Type #0 CSS is located, under the multiplexing pattern 1 of the control resource set (CORESET) and the synchronization signal block (SSB). The SFN where the Type #0 CSS is located has a period of 20ms. In the SFN, the Type #0 CSS is on a slot n0 and a slot n0+1, and the value of n0 is determined according to the calculation formula in 3GPP protocol TS 38.213.

In the high frequency band (for example, about 60GHz), in order to cope with a phase noise, a larger subcarrier bandwidth is usually selected. A larger subcarrier spacing (SCS) corresponds to a smaller slot duration. For example, when the SCS corresponds to 960KHz, the duration of one slot is 0.015625 millisecond, that is, 1/64 millisecond. In this case, the terminal may not need to blindly check the physical downlink control channel (PDCCH) in every slot, thus introducing the multi-slot group PDCCH monitoring capability. In other words, the PDCCH monitoring capability is defined according to a multi-slot group of X slots serving as a time unit, where X is the total number of slots included in one multi-slot group.

Therefore, it is necessary to study how to determine the total number X of the slots included in the above multi-slot group.

### SUMMARY

Therefore, the present disclosure provides a method and an apparatus for determining a number of a slot, a position of a slot and a duration of a multi-slot group, and a medium.

According to embodiments of a first aspect of the present disclosure, there is provided a method for determining number of slots, which is executed by a user equipment and includes: determining a first value X based on a subcarrier spacing (SCS) of a preset channel. The first value X is a total number of slots included in one multi-slot group corresponding to a second type of group of search space.

In some possible embodiments, the determining the first value X based on the subcarrier spacing of the preset channel includes: determining the first value X based on a SCS of a synchronization signal block (SSB) channel in response to that a radio resource control (RRC) state of the user equipment is an idle state.

In some possible embodiments, the determining the first value X based on the subcarrier spacing of the preset channel includes: determining that the first value is a total number of slots contained in one multi-slot group corresponding to a SCS of a SSB channel in response to that a RRC state of the user equipment is an idle state.

In some possible embodiments, the determining the first value X based on the subcarrier spacing of the preset channel includes: determining the first value X based on a SCS of a Type#0 CSS channel in response to that a RRC state of the user equipment is an idle state.

In some possible embodiments, the determining the first value X based on the subcarrier spacing of the preset channel includes: determining that the first value X is a total number of slots contained in one multi-slot group corresponding to a SCS of a Type#0 CSS channel in response to that a RRC state of the user equipment is an idle state.

In some possible embodiments, the determining the first value X based on the subcarrier spacing of the preset channel includes: in response to that a RRC state of the user equipment is an idle state, determining that the first value X is a maximum value between a total number of slots contained in one multi-slot group corresponding to a SCS of a SSB channel and a total number of slots contained in one multi-slot group corresponding to a SCS of a Type#0 CSS channel.

In some possible embodiments, the determining the first value X based on the subcarrier spacing of the preset channel includes: in response to that a RRC state of the user equipment is an idle state, determining that the first value X is a minimum value between a total number of slots contained in one multi-slot group corresponding to a SCS of a SSB channel and a total number of slots contained in one multi-slot group corresponding to a SCS of a Type#0 CSS channel.

In some possible embodiments, the determining the first value X based on the subcarrier spacing of the preset channel includes: in response to that a RRC state of the user equipment is a connected state and a network device does not configure the first value X for the user equipment, determining that the first value X is a default number of slots corresponding to a SCS of a BWP currently activated by the user equipment.

In some possible embodiments, the method further includes: determining that the first value X is a first value X configured by the network device for the user equipment in response to that a RRC state of the user equipment is a connected state.

According to embodiments of a second aspect of the present disclosure, there is provided a method for determining a duration of a multi-slot group, which is executed by a user equipment and includes: determining a first value X based on a subcarrier spacing (SCS) of a preset channel, wherein the first value X is a total number of slots included in one multi-slot group corresponding to a second type of group of search space; and determining that a duration of the multi-slot group corresponding to the second type of group of search space is a product of a duration of a single slot and the first value X.

In some possible embodiments, the duration of the single slot is a duration of a single slot corresponding to a subcarrier spacing (SCS) of a Type#0 CSS channel.

In some possible embodiments, the determining the first value X based on the subcarrier spacing of the preset channel includes: determining the first value X based on a SCS of a synchronization signal block (SSB) channel in response to a radio resource control (RRC) state of the user equipment is an idle state.

In some possible embodiments, the determining the first value X based on the subcarrier spacing of the preset channel includes: determining that the first value X is a total number of slots contained in one multi-slot group corresponding to a SCS of a SSB channel in response to that a RRC state of the user equipment is an idle state.

In some possible embodiments, the determining the first value X based on the subcarrier spacing of the preset channel includes: determining the first value X based on a SCS of a Type#0 CSS channel in response to that a RRC state of the user equipment is an idle state.

In some possible embodiments, determining the first value X based on the subcarrier spacing of the preset channel includes: determining that the first value X is a total number of slots contained in one multi-slot group corresponding to a SCS of a Type#0 CSS channel in response to that a RRC state of the user equipment is an idle state.

In some possible embodiments, the determining the first value X based on the subcarrier spacing of the preset channel includes: in response to that a RRC state of the user equipment is an idle state, determining that the first value X is a maximum value between a total number of slots contained in one multi-slot group corresponding to a SCS of a SSB channel and a total number of slots contained in one multi-slot group corresponding to a SCS of a Type#0 CSS channel.

In some possible embodiments, the determining the first value X based on the subcarrier spacing of the preset channel includes: in response to that a RRC state of the user equipment is an idle state, determining that the first value X is a minimum value between a total number of slots contained in one multi-slot group corresponding to a SCS of a SSB channel and a total number of slots contained in one multi-slot group corresponding to a SCS of a Type#0 CSS channel.

In some possible embodiments, the determining the first value X based on the subcarrier spacing of the preset channel includes: in response to that a RRC state of the user equipment is a connected state and a network device does not configure the first value X for the user equipment, determining that the first value X is a default number of slots corresponding to a SCS of a BWP currently activated by the user equipment.

In some possible embodiments, the method further includes: determining that the first value X is a first value X configured by the network device for the user equipment in response to that a RRC state of the user equipment is a connected state.

According to embodiments of a third aspect of the present disclosure, there is provided a method for determining a duration of a multi-slot group, executed by a user equipment and includes: determining a first value X based on a subcarrier spacing of a preset channel, wherein the first value X is a total number of slots included in one multi-slot group corresponding to a second type of group of search space; and determining that a slot where a Type#0 CSS channel is located includes a slot n0+X.

In some possible embodiments, the determining that the slot where the Type#0 CSS channel is located includes the slot n0+X includes: determining that the slot where the Type#0 CSS channel is located includes the slot n0 and a slot n0+X.

In some possible embodiments, the determining the first value X based on the subcarrier spacing of the preset channel includes: determining the first value X based on a SCS of a synchronization signal block (SSB) channel in response to that a radio resource control (RRC) state of the user equipment is an idle state.

In some possible embodiments, the determining the first value X based on the subcarrier spacing of the preset channel includes: determining that the first value is a total number of slots contained in one multi-slot group corresponding to a SCS of a SSB channel in response to that a RRC state of the user equipment is an idle state.

In some possible embodiments, the determining the first value X based on the subcarrier spacing of the preset channel includes: determining the first value X based on a SCS of the Type#0 CSS channel in response to that a RRC state of the user equipment is an idle state.

In some possible embodiments, the determining the first value X based on the subcarrier spacing of the preset channel includes: determining that the first value X is a total number of slots contained in one multi-slot group corresponding to a SCS of the Type#0 CSS channel in response to that a RRC state of the user equipment is an idle state.

In some possible embodiments, the determining the first value X based on the subcarrier spacing of the preset channel includes: in response to that a RRC state of the user equipment is an idle state, determining that the first value X is a maximum value between a total number of slots contained in one multi-slot group corresponding to a SCS of a SSB channel and a total number of slots contained in one multi-slot group corresponding to a SCS of the Type#0 CSS channel.

In some possible embodiments, the determining the first value X based on the subcarrier spacing of the preset channel includes: in response to that a RRC state of the user equipment is an idle state, determining that the first value X is a minimum value between a total number of slots contained in one multi-slot group corresponding to a SCS of a SSB channel and a total number of slots contained in one multi-slot group corresponding to a SCS of the Type#0 CSS channel.

In some possible embodiments, the determining the first value X based on the subcarrier spacing of the preset channel includes: in response to that a RRC state of the user equipment is a connected state and a network device does not configure the first value X for the user equipment, determining that the first value X is a default number of slots corresponding to a SCS of a BWP currently activated by the user equipment.

In some possible embodiments, the method further includes: determining that the first value X is the first value X configured by a network device for the user equipment in response to that a RRC state of the user equipment is a connected state.

According to embodiments of a fourth aspect of the present disclosure, a communication apparatus is provided. The communication apparatus can be used to execute the steps executed by the user equipment in the first aspect or any possible design of the first aspect. The user equipment can realize the functions in the above method through a hardware structure, a software module, or the hardware structure plus the software module.

When the communication apparatus according to the fourth aspect is realized by the software module, the communication apparatus may include a processing module, and the processing module may be used for the communication apparatus to execute processing operations, such as generating information/messages needed to be transmitted or processing received signals to obtain information/messages.

When executing the steps described in the first aspect, the processing module is configured to determine a first value X based on a subcarrier spacing (SCS) of a preset channel, and the first value X is a total number of slots included in one multi-slot group corresponding to a second type of group of search space.

According to embodiments of a fifth aspect of the present disclosure, a communication apparatus is provided. The communication apparatus can be used to execute the steps executed by the user equipment in the first aspect or any possible design of the first aspect. The user equipment can realize the functions in the above method through a hardware structure, a software module, or the hardware structure plus the software module.

When the communication apparatus according to the fifth aspect is realized by a software module, the communication apparatus may include a processing module, and the processing module may be used for the communication apparatus to execute processing operations, such as generating information/messages needed to be transmitted or processing received signals to obtain information/messages.

When executing the steps described in the second aspect, the processing module is configured to determine a first value X based on a subcarrier spacing (SCS) of a preset channel, and the first value X is a total number of slots included in one multi-slot group corresponding to a second type of group of search space. Moreover, the processing module is further configured to determine that a duration of the multi-slot group corresponding to the second type of group of search space is a product of a duration of a single slot and the first value X.

According to embodiments of a sixth aspect of the present disclosure, a communication apparatus is provided. The communication apparatus can be used to execute the steps executed by the user equipment in the first aspect or any possible design of the first aspect. The user equipment can realize the functions in the above method through a hardware structure, a software module, or the hardware structure plus the software module.

When the communication apparatus according to the sixth aspect is realized by a software module, the communication apparatus may include a processing module, and the processing module may be used for the communication apparatus to execute processing operations, such as generating information/messages needed to be transmitted or processing received signals to obtain information/messages.

When executing the steps in the third aspect, the processing module is configured to determine a first value X based on a subcarrier spacing (SCS) of a preset channel, and the first value X is a total number of slots included in one multi-slot group corresponding to a second type of group of search space. Moreover, the processing module is also used to determine that a slot where a Type#0 CSS channel is located includes a slot n0+X.

According to embodiments of a seventh aspect of the present disclosure, there is provided a communication apparatus including a processor and a memory. The memory is used for storing a computer program, and the processor is used for executing the computer program to realize the first aspect or any possible design of the first aspect.

According to embodiments of an eighth aspect of the present disclosure, there is provided a communication apparatus including a processor and a memory. The memory is used for storing a computer program, and the processor is used for executing the computer program to realize the second aspect or any possible design of the second aspect.

According to embodiments of a ninth aspect of the present disclosure, there is provided a communication apparatus including a processor and a memory. The memory is used for storing a computer program, and the processor is used for executing the computer program to realize the third aspect or any possible design of the third aspect.

According to embodiments of a tenth aspect of the present disclosure, a computer-readable storage medium is provided. Instructions (or called a computer program, a program) are stored in the computer-readable storage medium, and when the instructions are called and executed on a computer, the computer is allowed to execute the first aspect or any possible design of the first aspect.

According to embodiments of an eleventh aspect of the present disclosure, a computer-readable storage medium is provided. Instructions (or called a computer program, a program) are stored in the computer-readable storage medium, and when the instructions are called and executed on a computer, the computer is allowed to execute the second aspect or any possible design of the second aspect.

According to embodiments of a twelfth aspect of the present disclosure, a computer-readable storage medium is provided. Instructions (or called a computer program, a program) are stored in the computer-readable storage medium, and when the instructions are called and executed, the computer is allowed to execute the third aspect or any possible design of the third aspect.

It is to be understood that both the foregoing general description and the following detailed description are illustrative and explanatory only, which cannot be restrictive of the present disclosure.

### BRIEF DESCRIPTION OF THE DRAWINGS

The accompanying drawings described herein are used to provide a further understanding of embodiments of the present disclosure and constitute a part of the present disclosure. The schematic examples of embodiments of the present disclosure and their descriptions are used to explain the embodiments of the present disclosure and do not constitute undue limitations on the embodiments of the present disclosure. In the attached drawings:
the accompanying drawings, which are incorporated in and constitute a part of the specification, illustrate examples consistent with the embodiments of the present disclosure and together with the description, serve to explain the principles of the embodiments of the present disclosure.
Fig. 1 is a schematic diagram of an architecture of a wireless communication system provided by an embodiment of the present disclosure.
Fig. 2 is a flow chart of a method of transmitting a position of a slot according to an illustrative embodiment.
Fig. 3 is a flow chart of a method for determining a number of a slot according to an illustrative embodiment.
Fig. 4 is a flow chart of a method for determining a duration of a multi-slot group according to an illustrative embodiment.
Fig. 5 is a flow chart of a method for determining a position of a slot according to an illustrative embodiment.
Fig. 6 is a schematic diagram of an apparatus for determining a number of a slot according to an illustrative embodiment.
Fig. 7 is a schematic diagram of another apparatus for determining a number of a slot according to an illustrative embodiment.
Fig. 8 is a schematic diagram of an apparatus for determining a duration of a multi-slot group according to an illustrative embodiment.
Fig. 9 is a schematic diagram of an apparatus for determining a position of a slot according to an illustrative embodiment.

### DETAILED DESCRIPTION

The embodiments of the present disclosure will now be further described with reference to the attached drawings and specific embodiments.

Reference will now be made in detail to illustrative embodiments, examples of which are illustrated in the accompanying drawings. When the following description refers to the drawings, unless otherwise indicated, the same numbers in different drawings indicate the same or similar elements. The embodiments described in the following illustrative embodiments do not represent all embodiments consistent with embodiments of the present disclosure. Rather, they are merely examples of apparatus and methods consistent with some aspects of the present disclosure as detailed in the appended claims.

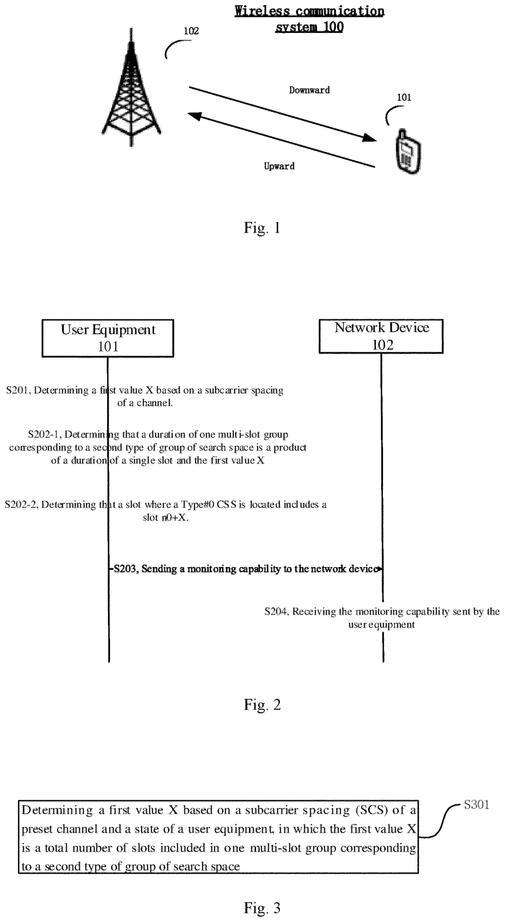

As shown in Fig. 1, a method for determining a number and a position of a slot and a duration of a multi-slot group provided by an embodiment of the present disclosure can be applied to a wireless communication system 100, and the wireless communication system 100 may include, but is not limited to, a network device 102 and a user equipment 101. The user equipment 101 is configured to support carrier aggregation, and the user equipment 101 can be connected to a plurality of carrier units of the network device 102, which include a main carrier unit and one or more auxiliary carrier units.

It should be understood that the above wireless communication system 100 can be applied to both a low-frequency scene and a high-frequency scene. Application scenarios of the wireless communication system 100 include, but are not limited to, a long term evolution (LTE) system, a LTE frequency division duplex (FDD) system, a LTE time division duplex (TDD) system, a worldwide interoperability for microwave access (WiMAX) communication system, a cloud radio access network (CRAN) system, a future 5th-Generation (5G) system, a new radio (NR) communication system or a future evolved public land mobile network (PLMN) system, etc.

The user equipment 101 shown above can be a user equipment (UE), a terminal, an access terminal, a terminal unit, a terminal station, a mobile station (MS), a remote station, a remote terminal, a mobile terminal, a wireless communication device, a terminal agent or a user equipment. The user equipment 101 can have wireless transmitting and receiving functions, and can communicate (such as, being in wireless communication) with one or more network devices 102 of one or more communication systems and accept network services provided by the network devices 102, and the network devices 102 here include, but are not limited to, the illustrated base stations.

The user equipment 101 can be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a user equipment in a future 5G network or a user equipment in a future evolved PLMN network, etc.

The network device 102 may be an access network device (or an access network site). The access network device refers to a device that provides network access functions, such as a radio access network (RAN) base station and so on. The network device may specifically include a base station (BS) device, or include a base station device and a radio resource management device for controlling the base station device, etc. The network device may also include a relay station (a relay device), an access point, and a base station in the future 5G network, a base station in the future evolved PLMN network or a NR base station. The network device can be a wearable device or a vehicle-mounted device. The network device can also be a communication chip with a communication module.

For example, the network device 102 includes, but is not limited to, a next generation base station (i.e. gnodeB, gNB) in 5G, an evolved node B (eNB) in a LTE system, a radio network controller (RNC), and a node B (NB) in a WCDMA system, a wireless controller in a CRAN system, a base station controller (BSC), a base transceiver station (BTS) in a GSM system or a CDMA system, a home base station (for example, a home evolved nodeB or a home node B, HNB), a baseband unit (BBU), a transmitting and receiving point (TRP), a transmitting point (TP) or a mobile switching center.

The user equipment 101 in an idle state relates to a multi-slot group PDCCH monitoring capability, which can be defined according to a multi-slot group containing X slots serving as a time unit. Therefore, the Type #0 CSS can be transmitted in a slot n0 and a slot n0+X, and X is the total number of the slots contained in the multi-slot group, so that the Type #0 CSS can be dispersed in two multi-slot groups, avoiding that two slots of the Type #0 CSS are located in the same multi-slot group, which otherwise will cause the user equipment to consume too much blind detection capability in one multi-slot group on the monitoring of the Type #0 CSS.

The subcarrier spacing corresponding to different channels may be different. For example, the SSB, Type #0 CSS PDCCH channel, and the PDSCH channel and the PDSCH channel of the UE in a connected state correspond to different subcarrier spacing. Therefore, it is necessary to determine the X value in the slot n0+X where the Type #0 CSS is located, or the X value of the multi-slot group in the monitoring capability.

Embodiments of the present disclosure provide a method for determining a time domain position of a physical downlink control channel (PDCCH). Fig. 2 is a flow chart of the method for determining the time domain position of the PDCCH according to an illustrative embodiment. As shown in Fig. 2, the method includes the following steps.

At Step S201, the user equipment 101 determines a first value X based on a subcarrier spacing (SCS) of a preset channel, and the first value X is a total number of slots included in a multi-slot group corresponding to a second type of group of search space (Group (2) SS).

At Step S202-1, the user equipment 101 determines that a duration of the multi-slot group corresponding to the second type of group of search space (Group (2) SS) is a product of a duration of a single slot and the first value X.

In an example, the duration of the single slot may be a duration of a single slot corresponding to a subcarrier spacing (SCS) of a Type#0 CSS channel.

At Step S202-2, the user equipment 101 determines that a slot where a Type#0 CSS is located includes a slot n0+X.

In an example, the user equipment 101 determines that the slot where the Type#0 CSS is located is a slot n0 and the slot n0+X.

At Step S203, the monitoring capability is sent to the network device 102, and the monitoring capability includes that the user equipment 101 monitors at most one Type#0 CSS monitoring occasion in one multi-slot group when the user equipment 101 is in a connected state.

At Step S204, the network device 102 receives the monitoring capability sent by the user equipment 101.

In a possible embodiment, the second type of group of search space, i.e. Group (2) SS, includes a Type#0 CSS, a Type #0A CSS, a Type #1 CSS and a Type #2 CSS.

It should be understood that in the above embodiments, the above method does not need to include both step S202-1 and step S202-2 after step S201. In an embodiment, the method may only include step S202-1 after step S201, and in an embodiment, the method may only include step S202-2 after step S201. In the embodiments of the present disclosure, the user equipment 101 determines the number of the slots of the corresponding multi-slot group according to its different states where it is. Therefore, it is convenient for the user equipment to determine the duration corresponding to the multi-slot group and the slot where the Type#0 CSS is located according to the number of the slots of the multi-slot group, which is beneficial to determining the time domain position of the PDCCH, and thus to determining the detection opportunity of the PDCCH.

In the embodiments of the present disclosure, the user equipment 101 determines the total number of the slots included in one multi-slot group corresponding to the second type of group of search space (Group (2) SS) based on the subcarrier spacing (SCS) of the preset channel, so that the user equipment can definitely determine the number of the slots of the multi-slot group corresponding to the Group (2) SS under the condition that the SCSs of different channels are different, so as to properly use the number of the slots.

Embodiments of the present disclosure provide a method for determining the number of slots, which is executed by the user equipment 101. Fig. 3 is a flow chart of the method for determining the number of slots according to an illustrative embodiment. As shown in Fig. 3, this method includes the following steps.

At Step S301, a first value X is determined based on a subcarrier spacing of a preset channel.

The first value X is a total number of slots included in one multi-slot group corresponding to a second type of group of search space.

In some possible embodiments, the second type group search space, i.e. Group (2) SS, includes a Type #0 CSS, a Type #0A CSS, a Type #1 CSS and a Type #2 CSS.

In some possible embodiments, when a RRC state of the user equipment 101 is an idle state, the first value X is the total number of slots contained in one multi-slot group corresponding to the SCS of the SSB channel.

In some possible embodiments, when the RRC state of the user equipment 101 is the idle state, the first value X is the total number of slots contained in one multi-slot group corresponding to the SCS of the Type#0 CSS channel.

In some possible embodiments, when the RRC state of the user equipment 101 is a connected state and the network device does not configure the first value X for the user equipment, it is determined that the first value X is a default number of slots corresponding to the SCS of a BWP currently activated by the user equipment.

In some possible embodiments, when the RRC state of the user equipment 101 is the connected state and the network device configures the first value X for the user equipment, it is determined that the first value X is a first value X configured by the network device for the user equipment.

In some possible embodiments, the first value X when the RRC state of the user equipment 101 is the connected state is greater than the first value X when the RRC state of the user equipment is the idle state.

In embodiments of the present disclosure, the user equipment 101 determines the total number of the slots included in one multi-slot group corresponding to the second type of group of search space (Group (2) SS) based on the subcarrier spacing (SCS) of the preset channel, so that the user equipment can definitely determine the number of the slots of the multi-slot group corresponding to the Group (2) SS under the condition that the SCSs of different channels are different, so as to properly use the number of the slots.

Embodiments of the present disclosure provide a method for determining the number of slots, and the method is executed by the user equipment 101 and includes the following steps.

At Step S301-1, in response to that the RRC state of the user equipment 101 is the idle state, the first value X is determined based on a SCS of a synchronization signal block (SSB) channel.

In a possible embodiment, the SSB channel includes a primary synchronization sequence, a secondary synchronization sequence, a physical broadcast channel and a demodulation reference signal.

In the embodiments of the present disclosure, when the UE is in the idle state, since the function of the SSB channel is for downlink synchronization, the SSB channel is taken as the preset channel, and the first value X is determined based on the SCS of the SSB channel.

Embodiments of the present disclosure provide a method for determining the number of slots, and the method is executed by the user equipment 101 and includes the following steps.

At Step S301-11, in response to that the RRC state of the user equipment 101 is the idle state, it is determined the first value is the total number of slots included in one multi-slot group corresponding to the SCS of the SSB channel.

In some possible embodiments, if the SCS of the SSB is 480KHz and the total number of slots contained in one multi-slot group corresponding to the SCS is 4, the first value X is 4.

In some possible embodiments, if the SCS of the SSB is 480KHz, the first value X can also be 2 or 8.

In the embodiments of the present disclosure, when the UE is in the idle state, since the function of the SSB channel is for downlink synchronization, the SSB channel is taken as the preset channel, and it is determined the first value is the total number of slots included in one multi-slot group corresponding to the SCS of the SSB channel.

Embodiments of the present disclosure provide a method for determining the number of slots, and the method is executed by the user equipment 101 and includes the following steps.

At Step S301-2, in response to that the RRC state of the user equipment 101 is the idle state, the first value X is determined based on the subcarrier spacing (SCS) of the Type#0 CSS channel.

In the embodiments of the present disclosure, when the UE is in the idle state, since the Type#0 CSS channel corresponds to SIB1 and is bound to CORESET#0, the Type#0 CSS channel is taken as the preset channel, and the first value X is determined based on the subcarrier spacing (SCS) of the Type#0 CSS channel.

Embodiments of the present disclosure provide a method for determining the number of slots, and the method is executed by the user equipment 101 and includes the following steps.

At Step S301-21, in response to that the RRC state of the user equipment 101 is the idle state, it is determined that the first value X is the total number of slots contained in one multi-slot group corresponding to the SCS of the Type#0 CSS channel.

In some possible embodiments, if the CSS of the Type#0 CSS is 960KHz and the total number of slots corresponding to the CSS of the Type#0 CSS is 8, the first value X is 8.

In some possible embodiments, if the CSS of the Type#0 CSS is 960KHz, the first value X can also be 2 or 4.

In the embodiments of the present disclosure, when the UE is in the idle state, since the Type#0 CSS channel corresponds to SIB1 and is bound to CORESET#0, the Type#0 CSS channel is taken as the preset channel, and it is determined that the first value is the total number of slots included in one multi-slot group corresponding to the SCS with of the SSB channel.

Embodiments of the present disclosure provide a method for determining the number of slots, and the method is executed by the user equipment 101 and includes the following steps.

At Step S301-3, in response to that the RRC state of the user equipment 101 is the idle state, the first value X is determined based on the total number of slots contained in one multi-slot group corresponding to the SCS of the SSB channel and the total number of slots contained in one multi-slot group corresponding to the SCS of the Type#0 CSS channel.

In the embodiments of the present disclosure, when the UE is in the idle state, the SSB channel and the Type#0 CSS channel are comprehensively considered to determine the first value X.

Embodiments of the present disclosure provide a method for determining the number of slots, and the method is executed by the user equipment 101 and includes the following steps.

At Steps S301-31, in response to that the RRC state of the user equipment 101 is the idle state, it is determined that the first value X is the maximum value between the total number of slots contained in one multi-slot group corresponding to the SCS of the SSB channel and the total number of slots contained in one multi-slot group corresponding to the SCS of the Type#0 CSS channel.

In the embodiments of the present disclosure, in the process of determining the first value X according to the total number of slots corresponding to the SCS of the SSB and the total number of slots corresponding to the SCS of the Type#0 CSS, the larger value of the two is taken as the first value X.

In the embodiments of the present disclosure, when the UE is in the idle state, the SSB channel and the Type#0 CSS channel are comprehensively considered, and it is determined that the first value X is the maximum value between the total number of slots contained in one multi-slot group corresponding to the SCS of the SSB channel and the total number of slots contained in one multi-slot group corresponding to the SCS of the Type#0 CSS channel, so that the value of the first value X is preferable.

Embodiments of the present disclosure provide a method for determining the number of slots, and the method is executed by the user equipment 101 and includes the following steps.

At steps S301-32, in response to that the RRC state of the user equipment 101 is the idle state, it is determined that the first value X is the minimum value between the total number of slots contained in one multi-slot group corresponding to the SCS of the SSB channel and the total number of slots contained in one multi-slot group corresponding to the SCS of the Type#0 CSS channel.

In the embodiments of the present disclosure, when the UE is in the idle state, the SSB channel and the Type#0 CSS channel are comprehensively considered, and it is determined that the first value X is the minimum value between the total number of slots contained in one multi-slot group corresponding to the SCS of the SSB channel and the total number of slots contained in one multi-slot group corresponding to the SCS of the Type#0 CSS channel, so that the value of the first value X is preferable.

Embodiments of the present disclosure provide a method for determining the number of slots, and the method is executed by the user equipment 101 and includes the following steps.

At Step S301-4, in response to that the RRC state of the user equipment 101 is the connected state and the network device does not configure the first value X for the user equipment, it is determined that the first value X is the default number of slots corresponding to the SCS of the BWP currently activated by the user equipment.

In the embodiments of the present disclosure, when the UE is in the connected state and the network device does not configure the first value X for the UE, it is determined that the first value X is the default number of slots corresponding to the SCS of the BWP currently activated by the user equipment.

Embodiments of the present disclosure provide a method for determining the number of slots, and the method is executed by the user equipment 101 and includes the following steps.

At Step S301-4, in response to that the RRC state of the user equipment 101 is the connected state, it is determined that the first value X is a first value X configured by the network device for the user equipment.

In the embodiments of the present disclosure, when the UE is in the connected state and the network device configures the first value X for the UE, the network device is directly used to configure the first value X for the UE.

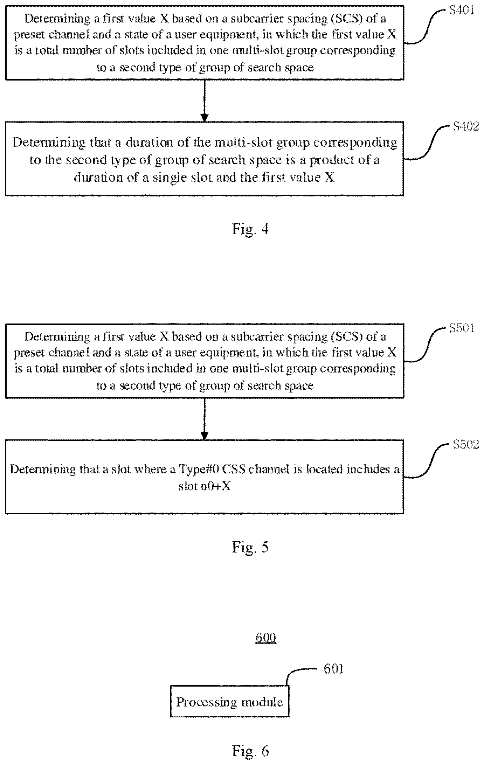

Embodiments of the present disclosure provide a method for determining a duration of a multi-slot group, which is executed by the user equipment 101. Fig. 4 is a flow chart of the method for determining the duration of the multi-slot group according to an illustrative embodiment. As shown in Fig. 4, the method includes the following steps.

At Step S401, a first value X is determined based on a subcarrier spacing (SCS) of a preset channel, and the first value X is a total number of slots included in one multi-slot group corresponding to a second type of group of search space.

At Step S402, it is determined that a duration of the multi-slot group corresponding to the second type of group of search space is a product of a duration of a single slot and the first value X.

In some possible embodiments, the second type of group of search space, i.e. Group (2) SS, includes a Type #0 CSS, a Type #0A CSS, a Type #1 CSS and a Type #2 CSS.

In some possible embodiments, the multi-slot group includes durations of X single slots, so that the duration of the multi-slot group (X slot group) is X multiplying the duration of the single slot.

In some possible embodiments, when the RRC state of the user equipment 101 is the idle state, the first value X is the total number of slots contained in one multi-slot group corresponding to the SCS of the SSB channel.

In some possible embodiments, when the RRC state of the user equipment 101 is the idle state, the first value X is the total number of slots contained in one multi-slot group corresponding to the SCS of the Type#0 CSS channel.

In some possible embodiments, when the RRC state of the user equipment 101 is the idle state, the first value X is the maximum value between the total number of slots contained in one multi-slot group corresponding to the SCS of the SSB channel and the total number of slots contained in one multi-slot group corresponding to the SCS of the Type#0 CSS channel.

In some possible embodiments, when the RRC state of the user equipment 101 is the idle state, the first value X is the minimum value between the total number of slots contained in one multi-slot group corresponding to the SCS of the SSB channel and the total number of slots contained in one multi-slot group corresponding to the SCS of the Type#0 CSS channel.

In some possible embodiments, when the RRC state of the user equipment 101 is the connected state and the network device does not configure the first value X for the user equipment, it is determined that the first value X is the default number of slots corresponding to the SCS of the BWP currently activated by the user equipment.

In some possible embodiments, when the RRC state of the user equipment 101 is the connected state and the network device configures the first value X for the user equipment, it is determined that the first value X is the first value X configured by the network device for the user equipment.

In some possible embodiments, the first value X when the RRC state of the user equipment 101 is the connected state is greater than the first value X when the RRC state of the user equipment 101 is the idle state.

In an example, the duration of the multi-slot group is T1 when the RRC state of the user equipment 101 is the connected state, the duration of the multi-slot group is T2 when the RRC state of the user equipment 101 is the idle state, and T1 > T2.

In an example, T1 includes a plurality of T2.

In some possible embodiments, the duration of the single slot is the duration of the single slot corresponding to the subcarrier spacing (SCS) of the Type#0 CSS channel. For example, when the SCS of the Type #0 CSS is 480khz, and the duration of one slot corresponding to the SCS of the Type #0 CSS is 1/32ms, which equals to 0.03125ms, the duration of the single slot is 1/32ms, which equals 0.03125ms.

It should be noted that the specific method of determining the first value X based on the subcarrier spacing (SCS) of the preset channel in step S401 has been explained in the above embodiments, and thus will not be described here.

In the embodiments of the present disclosure, the user equipment 101 determines the total number of slots included in one multi-slot group corresponding to the second type of group of search space (Group (2) SS) based on the subcarrier spacing (SCS) of the preset channel, so that the user equipment can definitely determine the number of slots of the multi-slot group corresponding to the Group (2) SS under the condition that the SCSs of different channels are different, thereby determining the duration of the multi-slot group corresponding to the Group (2) SS, and appropriately using the duration.

Embodiments of the present disclosure provide a method for determining a position of a slot, which is executed by the user equipment 101. Fig. 5 is a flow chart of the method for determining the position of the slot according to an illustrative embodiment. As shown in Fig. 5, this method includes the following steps.

At Step S501, a first value X is determined based on a subcarrier spacing of a preset channel, and the first value X is a number of slots included in a multi-slot group corresponding to a second type of group of search space.

At Step S502, it is determined that a slot where a Type#0 CSS channel is located includes a slot n0+X.

In some possible embodiments, determining that the slot where the Type#0 CSS channel is located includes the slot n0+X includes determining that the slot where the Type#0 CSS channel is located is a slot n0 and the slot n0+X.

In some possible embodiments, the second type of group of search space, i.e. Group (2) SS, includes a Type #0 CSS, a Type #0A CSS, a Type #1 CSS and a Type #2 CSS.

In some possible embodiments, the multi-slot group includes durations of X single slots, so that the duration of the multi-slot group (X slot group) is X multiplying the duration of the single slot.

In some possible embodiments, when the RRC state of the user equipment 101 is the idle state, the first value X is the total number of slots contained in one multi-slot group corresponding to the SCS of the SSB channel.

In some possible embodiments, when the RRC state of the user equipment 101 is the idle state, the first value X is the total number of slots contained in one multi-slot group corresponding to the SCS of the Type#0 CSS channel.

In some possible embodiments, when the RRC state of the user equipment 101 is the idle state, the first value X is the maximum value between the total number of slots contained in one multi-slot group corresponding to the SCS of the SSB channel and the total number of slots contained in one multi-slot group corresponding to the SCS of the Type#0 CSS channel.

In some possible embodiments, when the RRC state of the user equipment 101 is the idle state, the first value X is the minimum value between the total number of slots contained in one multi-slot group corresponding to the SCS of the SSB channel and the total number of slots contained in one multi-slot group corresponding to the SCS of the Type#0 CSS channel.

In some possible embodiments, when the RRC state of the user equipment 101 is the connected state and the network device does not configure the first value X for the user equipment, it is determined that the first value X is the default number of slots corresponding to the SCS of the BWP currently activated by the user equipment.

In some possible embodiments, when the RRC state of the user equipment 101 is the connected state and the network device configures the first value X for the user equipment, it is determined that the first value X is the first value X configured by the network device for the user equipment.

In some possible embodiments, the first value X when the RRC state of the user equipment 101 is the connected state is greater than the first value X when the RRC state of the user equipment 101 the idle state.

In an example, the duration of the multi-slot group is T1 when the RRC state of the user equipment 101 is the connected state, the duration of the multi-slot group is T2 when the RRC state of the user equipment 101 is the idle state, and T1 > T2.

In an example, T1 includes a plurality of T2.

In some possible embodiments, the duration of the single slot is the duration of the single slot corresponding to the subcarrier spacing (SCS) of the Type#0 CSS channel. For example, when the SCS of the Type #0 CSS is 480khz and the duration of one slot corresponding to the SCS of the Type#0 CSS is 1/32ms, which equals to 0.03125ms, the duration of the single slot is 1/32ms, which equals to 0.03125ms.

It should be noted that the specific method of determining the first value X based on the subcarrier spacing (SCS) of the preset channel in step S401 has been explained in the above embodiments, and thus will not be described here.

In the embodiments of the present disclosure, the user equipment 101 determines the total number of slots included in one multi-slot group corresponding to the second type of group of search space (Group (2) SS) based on the subcarrier spacing (SCS) of the preset channel, so that the user equipment can definitely determine the number of slots of the multi-slot group corresponding to the Group (2) SS under the condition that the SCSs of different channels are different, thereby determining the position of the slot where the Type#0 CSS is located, so as to accurately receive the Type#0 CSS.

Embodiments of the present disclosure provide a monitoring method, and the method is executed by the user equipment and includes the following steps.

In response to that a RRC state of the user equipment is a connected state, the user equipment 101 monitored at most one Type#0 CSS monitoring occasion in one multi-slot group.

In the embodiments of the present disclosure, for the user equipment 101 in the connected state, it is only supported that at most one Type#0 CSS monitoring occasion (MO) can be monitored in one multi-slot group.

Embodiments of the present disclosure provide a monitoring method, and the method is executed by the user equipment and includes the following steps.

The user equipment 101 monitors at most one Type#0 CSS monitoring occasion in one multi-slot group.

When the user equipment 101 reports a user's monitoring capability, the monitoring capability includes information for indicating the user equipment 101 to monitor at most one Type#0 CSS monitoring occasion in one multi-slot group.

In the embodiments of the present disclosure, for the user equipment 101 in the connected state, it is only supported that at most one Type#0 CSS monitoring occasion is monitored in one multi-slot group, and this monitoring capability is reported to the network device, so that the network device knows the capability of the user equipment 101.

Embodiments of the present disclosure provide a monitoring method, and the method is executed by the user equipment and includes the following steps.

The user equipment 101 monitors at most one Type#0 CSS monitoring occasion in one multi-slot group.

When the user equipment 101 monitors the Type # 0 CSS monitoring occasion, it gives priority to monitoring a slot n0 or gives priority to monitoring a slot n0+X.

In some possible embodiments, the duration T1 of the multi-slot group when the RRC state of the user equipment 101 is the connected state may include a plurality of the durations T2 of the multi-slot group when the RRC state of the user equipment 101 is the idle state.

In some possible embodiments, the network device 102 may give priority to sending the DCI in the slot n0 or the slot n0+X. Therefore, when the user equipment 101 gives priority to monitoring the slot n0 or the slot n0+X, the slot sending the DCI can be determined efficiently, and the DCI can be received in the corresponding slot.

In the embodiments of the present disclosure, for the user equipment 101 in the connected state, it is only supported that at most one Type#0 CSS monitoring occasion is monitored in one multi-slot group, and the user equipment 101 can give priority to selecting to monitor which monitoring occasion, thus saving the processing capacity of the user equipment.

Based on the same concept as the above embodiments of the method, embodiments of the present disclosure also provide a communication apparatus, which can have the functions of the user equipment 101 in the above embodiments of the method, and is used for executing the steps executed by the user equipment 101 provided in the above embodiments. The functions can be realized by hardware, or by software or by hardware executing corresponding software. The hardware or software includes one or more modules corresponding to the above functions.

In a possible implementation, a communication apparatus 600 shown in Fig. 6 can be used as the user equipment 101 involved in the above embodiments of the method, and execute the steps executed by the user equipment 101 in the above embodiments of the method. As shown in Fig. 6, the communication apparatus 600 may include a processing module 601. The processing module 601 can be used to support the communication apparatus to execute processing operations, such as generating information/messages to be sent, or processing received signals to obtain information/messages.

When executing the steps implemented by the user equipment 101, the processing module 601 is configured to determine a first value X based on a subcarrier spacing (SCS) of a preset channel, and the first value X is a total number of slots included in one multi-slot group corresponding to a second type of group of search space.

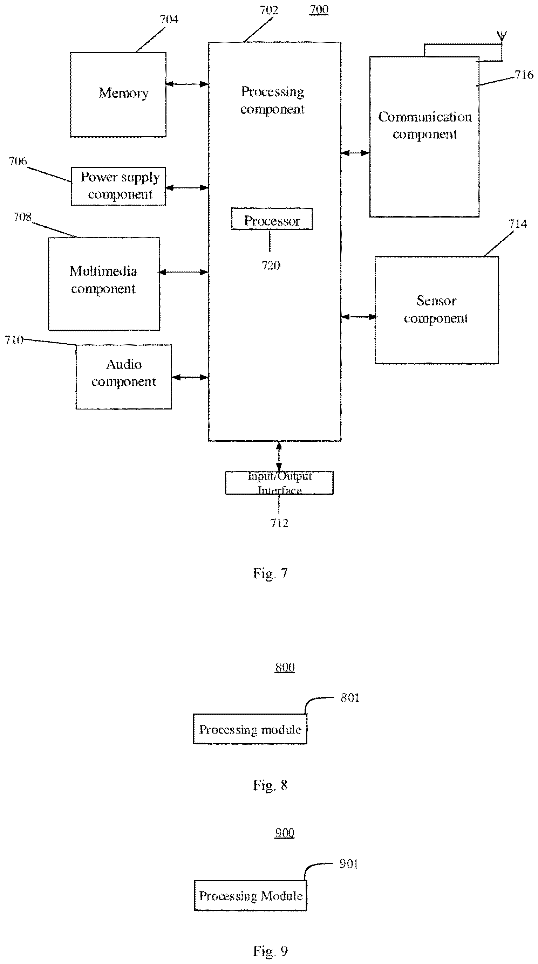

When the communication apparatus is the user equipment 101, its structure can also be shown as Fig. 7. An apparatus 700 can be a mobile phone, a computer, a digital broadcasting terminal, a message transceiving device, a game console, a tablet device, a medical device, a fitness device, a personal digital assistant, etc.

Referring to Fig. 7, the apparatus 700 may include one or more of the following components: a processing component 702, a memory 704, a power supply component 706, a multimedia component 708, an audio component 710, an input/output (I/O) interface 712, a sensor component 714, and a communication component 716.

The processing component 702 generally controls the overall operation of the apparatus 700, such as operations associated with display, telephone call, data communication, camera operation and recording operation. The processing component 702 may include one or more processors 720 to execute instructions to complete all or part of the steps of the method described above. In addition, the processing component 702 can include one or more modules to facilitate the interaction between the processing component 702 and other components. For example, the processing component 702 can include a multimedia module to facilitate interaction between the multimedia component 708 and the processing component 702.

The memory 704 is configured to store various types of data to support operations at the device 700. Examples of the data include instructions for any application or method operating on the apparatus 700, contact data, phone book data, messages, pictures, videos, and the like. The memory 704 can be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 706 provides power to various components of the apparatus 700. The power supply component 706 may include a power management system, one or more power supplies, and other components associated with generating, managing and distributing power for the apparatus 700.

The multimedia component 708 includes a screen that provides an output interface between the apparatus 700 and the user. In some embodiments, the screen may include a liquid crystal display (LCD) and a touch panel (TP). If the screen includes a touch panel, the screen may be implemented as a touch screen to receive an input signal from the user. The touch panel includes one or more touch sensors to sense touch, sliding and gestures on the touch panel. The touch sensor can not only sense the boundary of the touch or sliding action, but also detect the duration and pressure related to the touch or sliding operation. In some embodiments, the multimedia component 708 includes a front camera and/or a rear camera. When the device 700 is in an operation mode, such as a photographing mode or a video mode, the front camera and/or the rear camera can receive external multimedia data. Each front camera and rear camera can be a fixed optical lens system or have a focal length and an optical zoom capability.

The audio component 710 is configured to output and/or input audio signals. For example, the audio component 710 includes a microphone (MIC), which is configured to receive external audio signals when the apparatus 700 is in an operation mode, such as a call mode, a recording mode and a voice recognition mode. The received audio signal may be further stored in the memory 704 or transmitted via the communication component 716. In some embodiments, the audio component 710 further includes a speaker for outputting audio signals.

The I/O interface 712 provides an interface between the processing component 702 and a peripheral interface module, and the peripheral interface module can be a keyboard, a click wheel, a button, etc. These buttons may include, but are not limited to, a home button, a volume button, a start button and a lock button.

The sensor assembly 714 includes one or more sensors for providing various aspects of status assessments for the apparatus 700. For example, the sensor component 714 can detect the open/closed state of the device 700, the relative positioning of components, such as the display and keypad of the apparatus 700, the position change of the apparatus 700 or a component of the apparatus 700, the presence or absence of contact between the user and the apparatus 700, the orientation or acceleration/deceleration of the apparatus 700 and the temperature change of the apparatus 700. The sensor assembly 714 may include a proximity sensor configured to detect the presence of a nearby object without any physical contact. The sensor assembly 714 may also include an optical sensor, such as a CMOS or CCD image sensor, for use in imaging applications. In some embodiments, the sensor assembly 714 may further include an acceleration sensor, a gyro sensor, a magnetic sensor, a pressure sensor or a temperature sensor.

The communication component 716 is configured to facilitate wired or wireless communication between the apparatus 700 and other devices. The apparatus 700 can access wireless networks based on communication standards, such as WiFi, 4G or 5G, or their combination. In an illustrative embodiment, the communication component 716 receives a broadcast signal or broadcast related information from an external broadcast management system via a broadcast channel. In an illustrative embodiment, the communication component 716 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the apparatus 700 may be implemented by one or more application specific integrated circuits (ASIC), digital signal processors (DSP), digital signal processing device (DSPD), programmable logic devices (PLD), field programmable gate arrays (FPGA), controllers, microcontrollers, microprocessors or other electronic components for executing the above methods.

Based on the same concept as the above embodiments of the method, embodiments of the present disclosure also provide a communication apparatus, which can have the functions of the user equipment 101 in the above embodiments of the method, and is used for executing the steps executed by the user equipment 101 provided in the above embodiments. The functions can be realized by hardware, or by software or by hardware executing corresponding software. The hardware or software includes one or more modules corresponding to the above functions.

In a possible implementation, a communication apparatus 800 shown in Fig. 8 can be used as the user equipment 101 involved in the above embodiments of the method, and execute the steps executed by the user equipment 101 in the above embodiments of the method. As shown in Fig. 8, the communication apparatus 800 may include a processing module 801. The processing module 801 can be used to support the communication apparatus to execute processing operations, such as generating information/messages to be sent, or processing received signals to obtain information/messages.

When executing the steps implemented by the user equipment 101, the processing module 801 is configured to: determine a first value X based on a subcarrier spacing (SCS) of a preset channel, where the first value X is a total number of slots included in one multi-slot group corresponding to a second type of group of search space; and determine that a duration of the multi-slot group corresponding to the second type of group of search space is a product of a duration of a single slot and the first value X.

When the communication apparatus is the user equipment 101, its structure can also be shown as Fig. 7.

Based on the same concept as the above embodiments of the method, embodiments of the present disclosure also provide a communication apparatus, which can have the functions of the user equipment 101 in the above embodiments of the method, and is used for executing the steps executed by the user equipment 101 provided in the above embodiments. The functions can be realized by hardware, or by software or by hardware executing corresponding software. The hardware or software includes one or more modules corresponding to the above functions.

In a possible implementation, a communication apparatus 900 shown in Fig. 9 can be used as the user equipment 101 involved in the above embodiments of the method, and execute the steps executed by the user equipment 101 in the above embodiments of the method. As shown in Fig. 9, the communication apparatus 900 may include a processing module 901. The processing module 901 can be used to support the communication apparatus to execute processing operations, such as generating information/messages to be sent, or processing received signals to obtain information/messages.

When executing the steps implemented by the user equipment 101, the processing module 901 is configured to: determine a first value X based on a subcarrier spacing (SCS) of a preset channel, where the first value X is a total number of slots included in one multi-slot group corresponding to a second type of group of search space; and determine that the slot where the Type#0 CSS channel is located includes a slot n0+X.

When the communication apparatus is the user equipment 101, its structure can also be shown in Fig. 7.

Those skilled in the art will easily think of other embodiments of the disclosed embodiments after considering the specification and practicing the present disclosure disclosed herein. The present application is intended to cover any variation, use or adaptation of the disclosed embodiments, which follow the general principles of the disclosed embodiments and include common sense or common technical means in the technical field not disclosed in the present disclosure. The specification and examples are to be regarded as illustrative only, with the true scope and spirit of the disclosed embodiments being indicated by the following claims.

It should be understood that embodiments of the present disclosure are not limited to the precise structures that have been described above and shown in the drawings, and various modifications and changes can be made without departing from the scope thereof. The scope of that embodiment of the present disclosure is limited only by the append claims.

### Industrial practicability

The user equipment determines the total number of slots included in one multi-slot group corresponding to the second type of group of search space (Group (2) SS) based on the subcarrier spacing (SCS) of the preset channel, so that the user equipment can definitely determine the number of slots of the multi-slot group corresponding to the Group (2) SS under the condition that the SCSs of different channels are different, so as to properly use the number of slots.

## Claims

1. A method for determining number of slots, executed by a user equipment, and comprising:
determining a first value X based on a subcarrier spacing (SCS) of a preset channel,
wherein the first value X is a total number of slots comprised in one multi-slot group corresponding to a second type of group of search space.

2. The method according to claim 1, wherein the determining the first value X based on the subcarrier spacing of the preset channel comprises:
determining the first value X based on a SCS of a synchronization signal block (SSB) channel in response to that a radio resource control (RRC) state of the user equipment is an idle state.

3. The method according to claim 1, wherein the determining the first value X based on the subcarrier spacing of the preset channel comprises:
determining that the first value is a total number of slots contained in one multi-slot group corresponding to a SCS of a SSB channel in response to that a RRC state of the user equipment is an idle state.

4. The method according to claim 1, wherein the determining the first value X based on the subcarrier spacing of the preset channel comprises:
determining the first value X based on a SCS of a Type#0 CSS channel in response to that a RRC state of the user equipment is an idle state.

5. The method according to claim 1, wherein the determining the first value X based on the subcarrier spacing of the preset channel comprises:
determining that the first value X is a total number of slots contained in one multi-slot group corresponding to a SCS of a Type#0 CSS channel in response to that a RRC state of the user equipment is an idle state.

6. The method according to claim 1, wherein the determining the first value X based on the subcarrier spacing of the preset channel comprises:
in response to that a RRC state of the user equipment is an idle state, determining that the first value X is a maximum value between a total number of slots contained in one multi-slot group corresponding to a SCS of a SSB channel and a total number of slots contained in one multi-slot group corresponding to a SCS of a Type#0 CSS channel.

7. The method according to claim 1, wherein the determining the first value X based on the subcarrier spacing of the preset channel comprises:
in response to that a RRC state of the user equipment is an idle state, determining that the first value X is a minimum value between a total number of slots contained in one multi-slot group corresponding to a SCS of a SSB channel and a total number of slots contained in one multi-slot group corresponding to a SCS of a Type#0 CSS channel.

8. The method according to claim 1, wherein the determining the first value X based on the subcarrier spacing of the preset channel comprises:
in response to that a RRC state of the user equipment is a connected state and a network device does not configure the first value X for the user equipment, determining that the first value X is a default number of slots corresponding to a SCS of a BWP currently activated by the user equipment.

9. The method according to claim 1, further comprising:
determining that the first value X is the first value X configured by a network device for the user equipment in response to that a RRC state of the user equipment is a connected state.

10. A method for determining a duration of a multi-slot group, executed by a user equipment, and comprising:
determining a first value X based on a subcarrier spacing (SCS) of a preset channel, wherein the first value X is a total number of slots comprised in one multi-slot group corresponding to a second type of group of search space; and
determining that the duration of the multi-slot group corresponding to the second type of group of search space is a product of a duration of a single slot and the first value X.

11. The method according to claim 10, wherein the duration of the single slot is a duration of a single slot corresponding to a subcarrier spacing (SCS) of a Type#0 CSS channel.

12. The method according to claim 10, wherein determining the first value X based on the subcarrier spacing of the preset channel comprises:
determining the first value X based on a SCS of a synchronization signal block (SSB) channel in response to that a radio resource control (RRC) state of the user equipment is an idle state.

13. The method according to claim 10, wherein the determining the first value X based on the subcarrier spacing of the preset channel comprises:
determining that the first value X is a total number of slots contained in one multi-slot group corresponding to a SCS of a SSB channel in response to that a RRC state of the user equipment is an idle state.

14. The method according to claim 10, wherein the determining the first value X based on the subcarrier spacing of the preset channel comprises:
determining the first value X based on a SCS of a Type#0 CSS channel in response to that a RRC state of the user equipment is an idle state.

15. The method according to claim 10, wherein the determining the first value X based on the subcarrier spacing of the preset channel comprises:
determining that the first value X is a total number of slots contained in one multi-slot group corresponding to a SCS of a Type#0 CSS channel in response to that a RRC state of the user equipment is an idle state.

16. The method according to claim 10, wherein the determining the first value X based on the subcarrier spacing of the preset channel comprises:
in response to that a RRC state of the user equipment is an idle state, determining that the first value X is a maximum value between a total number of slots contained in one multi-slot group corresponding to a SCS of a SSB channel and a total number of slots contained in one multi-slot group corresponding to a SCS of a Type#0 CSS channel.

17. The method according to claim 10, wherein the determining the first value X based on the subcarrier spacing of the preset channel comprises:
in response to that a RRC state of the user equipment is an idle state, determining that the first value X is a minimum value between a total number of slots contained in one multi-slot group corresponding to a SCS of a SSB channel and a total number of slots contained in one multi-slot group corresponding to a SCS of a Type#0 CSS channel.

18. The method according to claim 10, wherein the determining the first value X based on the subcarrier spacing of the preset channel comprises:
in response to that a RRC state of the user equipment is a connected state and a network device does not configure the first value X for the user equipment, determining that the first value X is a default number of slots corresponding to a SCS of a BWP currently activated by the user equipment.

19. The method according to claim 10, further comprising:
determining that the first value X is the first value X configured by a network device for the user equipment in response to that a RRC state of the user equipment is a connected state.

20. A method for determining a position of a slot, executed by a user equipment, and comprising:
determining a first value X based on a subcarrier spacing of a preset channel, wherein the first value X is a total number of slots comprised in one multi-slot group corresponding to a second type of group of search space; and
determining that a slot where a Type#0 CSS channel is located comprises a slot n0+X.

21. The method according to claim 20, wherein the determining that the slot where the Type#0 CSS channel is located comprises the slot n0+X comprises:
determining that the slot where the Type#0 CSS channel is located comprises a slot n0 and the slot n0+X.

22. The method of claim 20, wherein the determining the first value X based on the subcarrier spacing of the preset channel comprises:
determining the first value X based on a SCS of a synchronization signal block (SSB) channel in response to that a radio resource control (RRC) state of the user equipment is an idle state.

23. The method of claim 20, wherein the determining the first value X based on the subcarrier spacing of the preset channel comprises:
determining that the first value is a total number of slots contained in one multi-slot group corresponding to a SCS of a SSB channel in response to that a RRC state of the user equipment is an idle state.

24. The method of claim 20, wherein the determining the first value X based on the subcarrier spacing of the preset channel comprises:
determining the first value X based on a SCS of the Type#0 CSS channel in response to that a RRC state of the user equipment is an idle state.

25. The method of claim 20, wherein the determining the first value X based on the subcarrier spacing of the preset channel comprises:
determining that the first value X is a total number of slots contained in one multi-slot group corresponding to a SCS of the Type#0 CSS channel in response to that a RRC state of the user equipment is an idle state.

26. The method of claim 20, wherein the determining the first value X based on the subcarrier spacing of the preset channel comprises:
in response to that a RRC state of the user equipment is an idle state, determining that the first value X is a maximum value between a total number of slots contained in one multi-slot group corresponding to a SCS of a SSB channel and a total number of slots contained in one multi-slot group corresponding to a SCS of the Type#0 CSS channel.

27. The method of claim 20, wherein the determining the first value X based on the subcarrier spacing of the preset channel comprises:
in response to that a RRC state of the user equipment is an idle state, determining that the first value X is a minimum value between a total number of slots contained in one multi-slot group corresponding to a SCS of a SSB channel and a total number of slots contained in one multi-slot group corresponding to a SCS of the Type#0 CSS channel.

28. The method of claim 20, wherein the determining the first value X based on the subcarrier spacing of the preset channel comprises:
in response to that a RRC state of the user equipment is a connected state and a network device does not configure the first value X for the user equipment, determining that the first value X is a default number of slots corresponding to a SCS of a BWP currently activated by the user equipment.

29. The method of claim 20, further comprising:
determining that the first value X is the first value X configured by a network device for the user equipment in response to that a RRC state of the user equipment is a connected state.

30. A communication apparatus, comprising:
a processing module configured to determine a first value X based on a subcarrier spacing (SCS) of a preset channel,
wherein the first value X is a total number of slots comprised in one multi-slot group corresponding to a second type of group of search space.

31. A communication apparatus, comprising:
a processing module configured to determine a first value X based on a subcarrier spacing (SCS) of a preset channel, wherein the first value X is a total number of slots comprised in one multi-slot group corresponding to a second type of group of search space; and determine that a duration of the multi-slot group corresponding to the second type of group of search space is a product of a duration of a single slot and the first value X.

32. A communication apparatus, comprising:
a processing module, configured to determine a first value X based on a subcarrier spacing of a preset channel, wherein the first value X is a total number of slots comprised in one multi-slot group corresponding to a second type of group of search space; and determine that a slot where a Type # 0 CSS channel is located comprises a slot n0+X.

33. A communication apparatus, comprising a processor and a memory,
wherein the memory is configured to store a computer program; and
the processor is configured to execute the computer program to realize the method according to any one of claims 1-9, or the method according to any one of claims 10-19, or the method according to any one of claims 20-29.

34. A computer-readable storage medium, having instructions stored therein, wherein when the instructions are called and executed on a computer, the computer is allowed to execute the method according to any one of claims 1-9, or the method according to any one of claims 10-19, or the method according to any one of claims 20-29.
